**Europäisches Patentamt**

**European Patent Office**

**Office européen des brevets**

(19)

(11) Veröffentlichungsnummer : **0 365 953 B1**

(12) # EUROPÄISCHE PATENTSCHRIFT

(45) Veröffentlichungstag der Patentschrift :
06.11.91 Patentblatt 91/45

(51) Int. Cl.⁵ : **B60C 23/00**

(21) Anmeldenummer : **89119119.9**

(22) Anmeldetag : **14.10.89**

(54) **Reifendruckregelanlage für geländegängige Kraftfahrzeuge.**

(30) Priorität : 22.10.88 DE 3836105

(43) Veröffentlichungstag der Anmeldung :
02.05.90 Patentblatt 90/18

(45) Bekanntmachung des Hinweises auf die
Patenterteilung :
06.11.91 Patentblatt 91/45

(84) Benannte Vertragsstaaten :
DE FR GB IT SE

(56) Entgegenhaltungen :
DE-A- 2 736 603
DE-A- 2 823 045
DE-A- 3 322 048
FR-A- 2 507 971
US-A- 4 498 515

(73) Patentinhaber : EISENWERKE
KAISERSLAUTERN GmbH
Barbarossastrasse 30
W-6750 Kaiserslautern (DE)

(72) Erfinder : Eberl, Klaus
Flurstrasse 7
W-6799 St. Julian 3 (DE)

(74) Vertreter : Patentanwälte Dipl.-Ing. F.W. Möll
Dipl.-Ing. H.Ch. Bitterich
Langstrasse 5 Postfach 2080
W-6740 Landau/Pfalz (DE)

## Beschreibung

Die Erfindung betrifft eine Reifendruckregelanlage für geländegängige Kraftfahrzeuge gemäß dem Oberbegriff des Anspruchs 1.

Bei geländegängigen und amphibischen Kraftfahrzeugen besteht die Notwendigkeit, den Luftdruck in den Reifen an das befahrene Gelände anzupassen, wobei diese Anpassung möglichst schnell, möglichst ohne Fahrtunterbrechung und ferngesteuert vom Fahrerhaus aus erfolgen soll. So wird beispielsweise für die Fahrt auf festen Straßen der Reifendruck auf 3,5 bar eingestellt, beim Fahren im tiefen Gelände auf 1,8 bar reduziert. Durch Verwendung geeigneter Ventile wird verhindert, daß der Druck im Reifen bei einem Ausfall von Anlagenkomponenten, beispielsweise bei einer Beschädigung der Druckluftleitung zwischen Fahrzeugchassis und Rad, auf Null absinken kann. Ferner sind handelsübliche Reifendruckregelanlagen im Stande, auch bei kleineren Reifendefekten den Reifendruck soweit aufrechtzuerhalten, daß das Fahrzeug manövrierfähig bleibt.

Es sind bereits sogenannte Einrohr-Reifendruckregelanlagen bekannt, die aus einer zentralen, stationären Ventilkombination, einer an der Radfelge befestigten, mitrotierenden Ventilkombination und einer geeigneten Drehdurchführung zwischen Fahrzeugchassis und Rad bestehen. Dabei werden sowohl die Druckluft zum Füllen des Reifens als auch die Steuerpulse zum Öffnen bzw. Schließen der mitrotierenden Ventilkombination über ein und dieselbe Leitung übertragen. Übliche Einrohr-Reifendruckregelanlagen zeichnen sich dadurch aus, daß die mitrotierende Ventilkombination eine Drossel besitzt, die zwar das ferngesteuerte Öffnen und Schließen des Radsteuerventils ermöglicht, jedoch das Befüllen bzw. Entleeren des Reifens erheblich verzögert.

Die DE-A-2823045 zeigt bereits eine Einrohr-Reifendruckregelanlage, in deren mitrotierender Ventilkombination ein spezielles Rückstromventil verwendet wird, das ein einwandfreies und schnelles Öffnen und Schließen des Radsteuerventils auch ohne eine Drossel ermöglicht. Allerdings unterstützt diese Reifendruckregelanlage lediglich zwei Reifenluft-Druckstufen, die zudem an den Ventilen der mitrotierenden Ventilkombination fest eingestellt sind.

Eine weitere Forderung an Reifendruckregelanlagen ist, daß die Drehdurchführung zwischen Fahrzeugchassis und Rad nur während der Befüllung des Reifens unter Druck steht, um die Dichtungen zu schonen. Diese Forderung wird von der Reifendruckregelanlage der DE-A-2823045 bereits grundsätzlich erfüllt.

Der vorliegenden Erfindung liegt die Aufgabe zugrunde, eine Reifendruckregelanlage der eingangs genannten Art anzugeben, die es ermöglicht, die Reifen des geländegängigen Kraftfahrzeuges ferngesteuert vom Fahrerhaus aus auf beliebige Drücke einzustellen, wobei minimale Füll- und Ablaßzeiten sowie das Aufrechterhalten eines Notdrucks im Reifen möglich sind.

Diese Aufgabe wird gelöst durch eine gattungsgemäße Reifendruckregelanlage mit den kennzeichnenden Merkmalen des Anspruchs 1.

Damit ergeben sich die Vorteile, daß die jeweiligen Kombinationen jeweils als Block hergestellt, verrohrt und eingebaut werden können, daß die Reifenluft direkt an der Felge abgelassen werden kann, wodurch die Ablaßzeiten erheblich verkürzt werden, daß in das Radsteuerventil die Mechanik zur Aufrechterhaltung eines minimalen Sicherheitsreifendrucks, der auch bei fehlerhafter Ansteuerung der Ventile nicht unterschritten werden kann, einbaubar ist, daß alle Füll-, Ablaß- und Meßvorgänge durch eine elektronische Schaltung überwacht und gesteuert werden können, wobei auf Wunsch auch eine Feinregelung möglich ist, und daß durch die minimale Dauer der Füll- und Ablaßvorgänge hohe Standzeiten der Dichtungselemente in der Drehdurchführung zwischen Fahrzeugchassis und Rad erreicht werden können.

Dadurch, daß die erfindungsgemäße Anlage als Zweirohr-Anlage ausgebildet ist, ist es möglich, das mitrotierende Radsteuerventil zu jedem beliebigen Zeitpunkt zu schließen, unabhängig davon, ob der vorgewählte Reifendruck erreicht ist oder nicht. Auf diese Weise kann die Zeit, während der die Drehdurchführung zwischen Fahrzeugchassis und Rad unter Druck steht, zeitlich begrenzt werden, auch wenn der Reifendruck beispielsweise wegen eines Reifendefektes, wegen eines Preßluftmangels oder wegen eines Regelungsdefektes seinen eingestellten Wert nicht erreicht, der von der Reifendruckregelanlage veranlaßte normale Schließvorgang also nicht ausgelöst würde.

Gemäß einer vorteilhaften Weiterbildung der Erfindung ist der Abblasöffnung des Steuerventils ein Rückschlagventil nachgeschaltet. Hierdurch wird verhindert, daß Schmutz oder Wasser über die offenstehende Abblasöffnung in das pneumatische System gelangen können.

Vorteilhafterweise ist das Vorsteuerventil als 3/2-Magnetventil mit vorgeschaltetem Feinregelventil ausgeführt. Das Magnetventil übernimmt das Ein- und Ausschalten bzw. Entlüften der Leitung, während das Feinregelventil den gewünschten Druck optimal einregelt. Falls das Feinregelventil als Proportionalventil ausgelegt ist, kann es auf jeden beliebigen Zwischendruck eingestellt werden.

Für den Fall, daß die üblichen zwei Reifendruckstufen vorgesehen sind, werden zwei fest eingestellte Vorsteuerventile vorgesehen, die über ein Wechselventil ausgangsseitig parallel geschaltet werden. Mit Hilfe des Wechselventils wird nur das jeweils aktive Vorsteuerventil zur Ansteuerung des Relaisventils herangezogen, eine gegenseitige Störung der Ventile ist ausgeschlossen.

Gemäß einer vorteilhaften Ausgestaltung der Erfindung ist hinter dem Relaisventil ein Druckschalter mit wenigstens einem druckabhängigen Schaltpunkt, üblicherweise zwei druckabhängigen Schaltpunkten, angeordnet, welcher eine Zeitverzögerung aktiviert, nach deren Ablauf der Reifenfüllvorgang beendet wird. Die Schaltpunkte des Druckschalters liegen um eine gewisse Sicherheitsreserve unterhalb der jeweiligen Reifensolldruckstufe. Sollte aus den schon geschilderten Gründen der eingestellte Reifensolldruck nicht erreicht werden, wird nach Ablauf der Zeitverzögerung der Schließvorgang über die Steuerleitung ausgelöst, um die Drehdurchführung zwischen Fahrzeugchassis und Rad wieder drucklos machen zu können.

Gemäß einer vorteilhaften Weiterbildung der Erfindung ist vor der Drehdurchführung ein Radabsperrventil, welches vom Fahrzeugführer betätigbar ist, in die Versorgungsleitung eingeschaltet. Dadurch kann jedes Rad einzeln an die zentrale Ventilkombination angeschaltet werden, so daß beispielsweise jeder Reifen individuell auf Druck gebracht werden kann.

Diese Ausgestaltung der Erfindung ist besonders dann von Bedeutung, wenn der Luftdruck jedes Reifens einzeln überwacht werden soll. In diesem Fall wird nur das Radabsperrventil des zu prüfenden Reifens geöffnet, alle anderen Radabsperrventile werden geschlossen. Um das betreffende Radsteuerventil öffnen zu können, ist wiederum über ein Wechselventil hinter dem Relaisventil ein Meßventil mit nachgeschalteter Drossel in die Versorgungsleitung geschaltet und an die Versorgungsleitung ein Druckmeßgerät angeschlossen. Das Meßventil gibt einen Öffnungdruck auf die Versorgungsleitung, wobei die Drossel verhindert, daß eine nennenswerte Luftmenge fließen kann, die den Meßwert verfälschen könnte.

Vorzugsweise ist der Eingang des Meßventils an den Ausgang des Vorsteuerventils für den höchsten Reifendruck, gegebenenfalls an den Ausgang des entsprechenden Feinregelventils, angeschlossen. Entsprechendes gilt auch für den Eingang des Schließdrucksteuerventils. Hierdurch wird ein ansonsten erforderliches gesondertes Druckbegrenzungsventil eingespart.

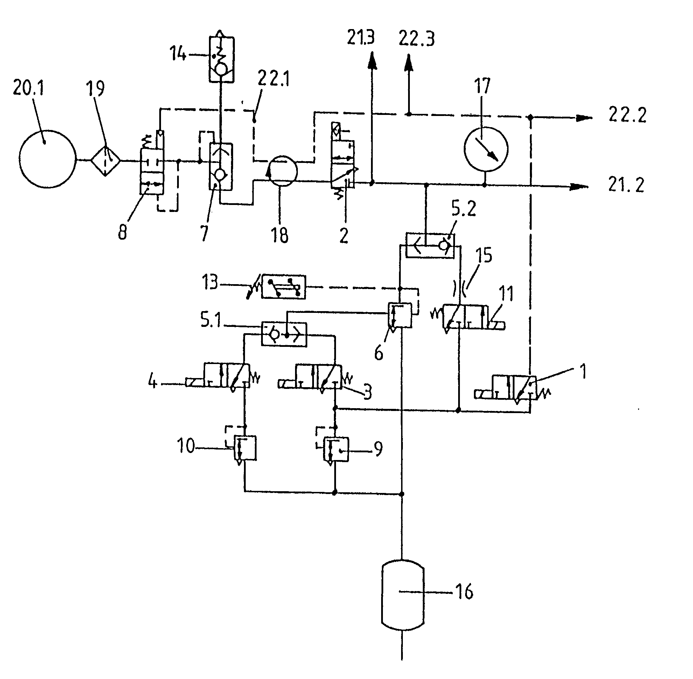

Anhand der Zeichnung soll die Erfindung in Form eines Ausführungsbeispiels näher erläutert werden.

Die Figur zeigt den pneumatischen Teil einer Zweirohr-Reifendruckregelanlage nach der Erfindung. Die in einem Vorratsbehälter 16 gesammelte Druckluft liegt am Eingang eines Relaisventils 6. Dessen Steuereingang wird über ein erstes Wechselventil 5.1 abwechselnd von einem von zwei Vorsteuerventilen angesteuert. Bei diesen Vorsteuerventilen handelt es sich um die Kombination aus je einem Feinregelventil 9, 10 und einem nachgeschalteten 3/2-Magentventil 3, 4. Das eine Feinregelventil 9 ist beispielsweise auf die oberste, das andere Feinregelventil 10 auf die unterste Druckstufe der einzuregelnden Reifenluftdrücke eingestellt. Die 3/2-Magentventile 3, 4 können vom Fahrzeugführer ferngesteuert eingeschaltet werden, wodurch der jeweilige Druckwert für die Regelung maßgebend wird.

Es versteht sich, daß anstelle zweier fest eingestellter Vorsteuerventile bzw. -ventilkombinationen ein umschaltbares oder gar proportional einstellbares Ventil verwendet werden kann, wenn beliebige Zwischenstufen gewünscht werden.

Vom Ausgang des Relaisventils 6 mit seinem großen Durchlaßquerschnitt gelangt die Reifenfülluft über ein zweites Wechselventil 5.2, dessen Funktion nachstehend noch näher erläutert wird, auf ein Radabsperrventil 2, auf eine Drehdurchführung 18 zwischen Fahrzeugchassis und Rad und von diesem auf ein Schnellöseventil 7 mit nachgeschaltetem Radsteuerventil 8. Schnellöseventil 7 und Radsteuerventil 8 sind direkt an der Radfelge befestigt und bilden eine mitrotierende Ventilkombination.

Am Ausgang des Radsteuerventils 8 ist über ein Filter 19 der symbolisch dargestellte Reifen 20 angeschlossen.

Das Schnellöseventil 7 weist eine Abblasöffnung auf, über die die Reifenluft auf kürzestem Wege direkt in die Atmosphäre austreten kann, wenn der Reifenluftdruck reduziert werden soll. Der Abblasöffnung des Schnellöseventils 7 ist ein federbelastetes Rückschlagventil 14 nachgeordnet. Dieses verhindert, daß über die offenstehende Abblasöffnung des Schnellöseventils 7 Schmutz und Wasser in die Versorgungsleitung 21.1 eindringen können.

Während das Radsteuerventil 8 wie von Einrohr-Reifendruckregelanlage bekannt, über einen Druckpuls auf der Versorgungsleitung 21.1 geöffnet wird, kann es über einen Schließdruck auf einer Steuerleitung 22.1 zu jedem beliebigen Zeitpunkt und bei jeder beliebigen Druckhöhe geschlossen werden. Der Schließdruck wird erzeugt über ein zentral angeordnetes Schließdruckventil 1. Dieses Schließdruckventil 1 kann vom Fahrzeugführer betätigt werden; normalerweise übernimmt diese Aufgabe jedoch die Regelanlage, sobald der vorgewählte Solldruck und der Reifenluft-Istdruck übereinstimmen.

Da es bei derartigen Reifendruckregelanlagen passieren kann, daß der Reifendruck den eingestellten Sollwert nicht oder nur sehr schleichend erreicht, beispielsweise weil der zu befüllende Reifen einen Defekt hat, oder weil die Kompressorleistung nicht ausreicht, würde das Schließdruck-Signal des Schließdrucksteuerventils 1 sehr spät kommen oder ganz ausbleiben mit der Folge, daß die Drehdurchführung 18 ständig unter Druck steht, ihre Dichtungen also schnell verschleißen. Um dies zu verhindern, ist dem Relaisventil 6 ein Doppeldruckschalter 13 nachgeschaltet, dessen beide Schaltpunkte um eine ausreichende Sicherheitsmarge unter den Sollwerten der beiden Vorsteuerventile 3, 9 bzw. 4, 10 liegen. Sobald diese Druckpunkte des Doppeldruckschalters 13 erreicht sind, wird eine in der Zeichnung nicht dargestellte Zeitverzögerung aktiviert, nach deren Ablauf das Schließdrucksteuerventil 1 zwangsweise betätigt, das Radsteuerventil 8 geschlossen, die Versorgungsleitung 21.1 entlüftet und damit die Drehdurchführung 18 entlastet werden. Es versteht sich, daß bei ausreichender Kompressorleistung der Reifenfüllvorgang auch schon vor dem Ablauf der Zeitverzögerung beendet wird.

Das Schließdrucksteuerventil 1 ist eingangsseitig am Ausgang des Feinregelventils 9 für die höchste Reifendruckluftstufe angeschlossen, um ein ansonsten erforderliches eigenes Druckbegrenzungsventil einzusparen.

Wie schon erwähnt, ist hinter dem Relaisventil 6 ein zweites Wechselventil 5.2 in die Versorgungsleitung 21 eingeschaltet. Der zweite Anschluß des Wechselventils steht in Verbindung mit einem Meßventil 11 mit nachgeschalteter Drossel 15. Falls der Fahrzeugführer mit Hilfe des Meßgerätes 17 den Luftdruck in einem der Reifen 20 messen will, schaltet er zunächst das betreffende Radabsperrventil 2 ein. Anschließend betätigt er das Meßventil 11, wodurch die Versorgungsleitung 21 unter Druck gesetzt und das Radsteuerventil 8 geöffnet wird. Der Reifen 20 steht über die Versorgungsleitung 21 mit dem Meßinstrument 17 in unmittelbarer Verbindung, so daß dieses den aktuellen Reifendruck anzeigt. Dank der Drossel 15 ist die in die Versorgungsleitung 21 über das Meßventil 11 eingespeiste Luftmenge minimal, so daß der Meßvorgang nicht gestört wird.

Auch hier ist der Eingang des Meßventils 11 wieder an den Ausgang des Feinregelventils 9 für den höchsten Reifendruck angeschlossen, um so einen gesonderten Druckbegrenzer einsparen zu können.

Es versteht sich, daß die in der Zeichnung für einen Reifen 20 dargestellten mitrotierenden Ventile 7, 8, 14 und Komponenten 2, 18, 19 für alle übrigen Reifen ebenfalls vorzusehen sind und an die Abzweigungen 21.2, 21.3 der Versorgungsleitung 21 und die Abzweigungen 22.2, 22.3 der Steuerleitung 22 sinngemäß und analog anzuschließen sind.

Das Radsteuerventil 8 ist so ausgeführt, daß es unabhängig von einem Schließdruck über die Steuerleitung 22 bei einem Abfall des Reifen-Drucks auf einen Minimalwert von z. B. 1 bar federbelastet selbsttätig schließt. Im übrigen ist es wie schon erwähnt möglich, mit Hilfe der Radabsperrventile 2 jeden einzelnen Reifen gezielt zu- und abzuschalten, um beispielsweise in einem defekten Reifen einen für Notlaufeigenschaften noch ausreichenden Druck aufrechtzuerhalten, ohne die übrigen, intakten Reifen und ihre Drehdurchführungen zu überladen bzw. zu beschädigen.

**Patentansprüche**

1. Reifendruckregelanlage für geländegängige Kraftfahrzeuge, bestehend aus einer zentralen Ventilkombination, die den vom Fahrzeugführer vorgewählten Druck in den Reifen (20) aufbaut, überwacht und aufrechterhält, je einer Drehdurchführung (18) für eine Druckluft-Versorgungsleitung (21) und für eine Steuerleitung (22) zwischen Fahrzeugchassis und jedem Rad und je einer mitrotierenden Ventilkombination an den Rädern, dadurch gekennzeichnet, daß die zentrale Ventilkombination ein Relaisventil (6), welches den Durchgang von einem Druckluft-Vorratsbehälter (16) zu den Reifen (20) freigibt bzw. sperrt, wenigstens ein Vorsteuerventil (3, 4), welches vom Fahrzeugführer ein- und ausschaltbar ist und den Vorsteuerdruck für das Relaisventil (6) erzeugt, und ein Schließdrucksteuerventil (1) umfaßt, welches einen Steuerdruck zum Betätigen der mitrotierenden Ventilkombinationen erzeugt, und daß die mitrotierende Ventilkombination ein Radsteuerventil (8), welches durch einen Druckpuls in der Versorgungsleitung (21) geöffnet und durch den Steuerdruck in der Steuerleitung (22) geschlossen wird, und ein diesem vorgeschaltetes Schnellöseventil (7), welches das Abblasen von Reifenluft erlaubt, umfaßt.

2. Reifendruckregelanlage nach Anspruch 1, dadurch gekennzeichnet, daß der Abblasöffnung des Schnellöseventils (7) ein Rückschlagventil (14) nachgeschaltet ist.

3. Reifendruckregelanlage nach Anspruch 1 oder 2, dadurch gekennzeichnet, daß das Vorsteuerventil (3, 4) als 3/2-Magnetventil mit vorgeschaltetem Feinregelventil (9, 10) ausgeführt ist.

4. Reifendruckregelanlage nach Anspruch 1, 2 oder 3, dadurch gekennzeichnet, daß zwei fest eingestellte Vorsteuerventile (3,4) vorgesehen und über ein Wechselventil (5.1) ausgangsseitig parallelgeschaltet sind.

5. Reifendruckregelanlage nach einem der Ansprüche 1 bis 4, dadurch gekennzeichnet, daß hinter dem Relaisventil (6) ein Druckschalter (13) mit wenigstens einem druckabhängigen Schaltpunkt angeordnet ist, welcher eine Zeitverzögerung aktiviert, nach deren Ablauf der Reifenfüllvorgang beendet wird.

6. Reifendruckregelanlage nach einem der Ansprüche 1 bis 5, dadurch gekennzeichnet, daß vor der Drehdurchführung (18) ein Radabsperrventil (2), welches vom Fahrzeugführer betätigbar ist, in die Versorgungsleitung (21) eingeschaltet ist.

7. Reifendruckregelanlage nach einem der Ansprüche 1 bis 6, dadurch gekennzeichnet, daß über ein Wechselventil (5.2) hinter dem Relaisventil (6) ein Meßventil (11) mit nachgeschalteter Drossel (15) in die Versorgungsleitung (21) eingeschaltet ist und daß an die Versorgungsleitung (21) ein Druckmeßgerät (17) angeschlossen ist.

8. Reifendruckregelanlage nach Anspruch 7, dadurch gekennzeichnet, daß der Eingang des Meßventils (11) an den Ausgang des Vorsteuerventils (3, 9) für den höchsten Reifendruck, gegebenenfalls an den Ausgang des entsprechenden Feinregelventils (9), angeschlossen ist.

9. Reifendruckregelanlage nach einem der Ansprüche 1 bis 8, dadurch gekennzeichnet, daß der Eingang des Schließdrucksteuerventils (1) an den Ausgang des Vorsteuerventils (3, 9) für den höchsten Reifendruck, gegebenenfalls an den Ausgang des entsprechenden Feinregelventils (9), angeschlossen ist.

## Claims

1. A tyre pressure regulating apparatus for cross-country motor vehicles, comprising a central valve combination by which the pressure in the tyres (20) preselected by the vehicle driver is created, monitored and maintained, a respective rotating coupling (18) for a compressed air supply line (21) and for a control line (22) between the vehicle chassis and each wheel, and a respective co-rotating valve combination mounted on the wheels, characterised in that the central valve combination comprises a relay valve (6), which releases and blocks the communication between a compressed air feed container (16) and the tyres (20), at least one pilot valve (3, 4) which can be switched on and off by the vehicle driver and which generates the pilot pressure for the relay valve (6), and a closing pressure control valve (1) which generates a control pressure for the actuation of the co-rotating valve combinations, and that the co-rotating valve combination comprises a wheel control valve (8), which is opened by a pressure impulse in the supply line (21) and closed by the control pressure in the control line (22) and fast-release valve (7) which is connected to the input end of said wheel control valve (8) and which allows the outlet of tyre air.

2. A tyre pressure regulating apparatus as claimed in Claim 1, characterised in that the outlet opening of the fast release valve (7) is followed by a non-return valve (14).

3. A tyre pressure regulating apparatus as claimed in Claim 1 or 2, characterised in that the pilot valve (3, 4) is designed as a 3/2- solenoid valve preceded by a precision regulating valve (9, 10).

4. A tyre pressure regulating apparatus as claimed in Claim 1, 2 or 3 characterised in that two permanently set pilot valves (3, 4) are provided and are connected in parallel at their output end via a change-over valve (5.1).

5. A tyre pressure regulating apparatus as claimed in one of Claims 1 to 4, characterised in that a pressure switch (13) having at least one pressure-dependent switching point is arranged following the relay valve (6), which pressure switch (13) activates a time delay, on the expiration of which the tyre inflation process is terminated.

6. A tyre pressure regulating apparatus as claimed in one of Claims 1 to 5, characterised in that prior to the rotating coupling (18) a wheel isolating valve (2), which can be actuated by the vehicle driver, is connected into the supply line (21).

7. A tyre pressure regulating apparatus as claimed in one of Claims 1 to 6, characterised in that via a change-over valve (5.2) following the relay valve (6) a measuring valve (11), connected at its output end to a choke (15), is connected into the supply line (21) and that a pressure measuring device (17) is connected to the supply line (21).

8. A tyre pressure regulating apparatus as claimed in Claim 7, characterised in that the input of the measuring valve (11) is connected to the output of the pilot valve (3, 9) for the highest tyre pressure, possibly to the output of the corresponding precision regulating valve (9).

9. A tyre pressure regulating apparatus as claimed in one of Claims 1 to 8, characterised in that the input of the closing pressure control valve (1) is connected to the output of the pilot valve (3, 9) for the highest tyre pressure, possibly to the output of the corresponding precision regulating valve (9).

## Revendications

1. Dispositif de réglage de la pression de pneus pour véhicules tout terrain, constitué d'une combinaison centrale de soupapes qui établit, contrôle et maintient la pression des pneus (20), sélectionnée par le conducteur, pour chaque pneu, d'un joint tournant (18) pour un conduit d'alimentation d'air comprimé (21) et pour un conduit de commande (22) entre le châssis du véhicule et chaque roue et, pour chaque pneu, d'une combinaison de soupapes tournant en même temps que les roues, caractérisé en ce que la combinaison centrale de soupapes comporte une soupape relais (6) qui autorise ou interdit le passage depuis un réservoir d'air comprimé (6) jusqu'aux pneus (20), au moins une soupape pilote (3, 4) qui peut être enclenchée et déclenchée par le conducteur et qui produit la pression pilote pour la soupape relais (6) ainsi qu'une soupape de commande de pression de fermeture (1) qui produit une pression de commande pour actionner la combinaison de soupapes tournante et en ce que la combinaison de soupapes tournante comporte une soupape de commande de roue (8) qui est ouverte par une impulsion de pression dans le conduit d'alimentation (21) et qui est fermée par la pression de commande dans le conduit de commande (22) ainsi qu'une soupape à déclenchement rapide (7), montée en amont de celle-ci, qui autorise l'échappement de l'air du pneu.

2. Dispositif de réglage de la pression des pneus selon la revendication 1, caractérisé en ce qu'une soupape de non-retour (14) est montée en aval de l'ouverture d'échappement de la soupape à déclenchement rapide (7).

3. Dispositif de réglage de la pression des pneus selon la revendication 1 ou 2, caractérisé en ce que la soupape pilote (3, 4) se présente sous la forme d'une électrovanne 3/2 avec soupape de réglage fin (9, 10) montée en amont.

4. Dispositif de réglage de la pression des pneus selon les revendications 1, 2 ou 3, caractérisé en ce qu'il est prévu deux soupapes pilotes (3, 4) réglées de manière fixe et montées en parallèle, côté sortie, par une soupape à deux voies (5.1).

5. Dispositif de réglage de la pression des pneus selon l'une des revendications 1 à 4, caractérisé en ce que, derrière la soupape relais (6), est monté un interrupteur à pression (13), avec au moins un point de commutation dépendant de la pression, qui active une temporisation à l'expiration de laquelle le gonflage des pneus est terminé.

6. Dispositif de réglage de la pression des pneus selon l'une des revendications 1 à 5, caractérisé en ce qu'une soupape d'arrêt de roue (2), qui peut être actionnée par le conducteur, est montée dans le conduit d'alimentation (21), en amont du joint tournant (18).

7. Dispositif de réglage de la pression des pneus selon l'une des revendications 1 à 6, caractérisé en ce qu'une soupape de mesure (11) avec clapet d'étranglement (15), monté en aval, est placé dans le conduit d'alimentation (21), derrière la soupape relais (6), par l'intermédiaire d'une soupape à deux voies (5.2) et en ce qu'au conduit d'alimentation (21) est raccordé un appareil de mesure de pression (17).

8. Dispositif de réglage de la pression des pneus selon la revendication 7, caractérisé en ce que l'entrée de la soupape de mesure (11) est raccordée à la sortie de la soupape pilote (3, 9) pour la pression maximale des pneus, éventuellement à la sortie de la soupape de réglage fin (9) correspondante.

9. Dispositif de réglage de la pression des pneus selon l'une des revendications 1 à 8, caractérisé en ce que l'entrée de la soupape de commande de pression de fermeture (1) est reliée à la sortie de la soupape pilote (3, 9) pour la pression maximale des pneus, éventuellement à la sortie de la soupape de réglage fin (9) correspondante.